# EUROPEAN PATENT APPLICATION

(11) **EP 4 361 930 A1**
(43) Date of publication of application: **01.05.2024**
(21) Application number: 22203896.0
(22) Date of filing: 26.10.2022
(51) Int. Cl.: G06Q 20/04, G06Q 20/20, G06Q 20/32

(54) **A TRANSACTION PROCESSING METHOD FOR PRIVATELY CAPTURING A RECEIPT**

(71) Applicant: Mastercard International Incorporated, Purchase NY 10577 (US)
(72) Inventor: CLARK, Michael, Woking (GB); COLLINS, Robert, Dublin (IE)
(74) Representative: Murgitroyd & Company

(57) **Abstract**

Typically, a consumer making a purchase is provided a receipt, as proof of purchase, following the completion of the transaction. It is known that an electronic point of sale (PoS) system is able to provide both paper and electronic receipts. However, for an electronic receipt to be provided, a user must typically provide an email address. In some circumstances, the consumer may not wish to provide the merchant with their email address. It is known that the merchant may store the email address and/or provide the email address to a third party. The consumer's email address may be used for marketing or other email spam. Furthermore, the consumer's email address may be used for user tracking. The present disclosure provides a transaction processing method for privately capturing a receipt, wherein an electronic contact alias is provided and the receipt is provided to the consumer via the electronic contact alias.

## Description

### Field of the Disclosure

The present disclosure relates generally to a transaction processing method and finds particular, although not exclusive, utility in providing a transaction processing method for privately capturing a receipt.

### Background

Typically, a consumer making a purchase is provided a receipt, as proof of purchase, following the completion of the transaction. It is known that an electronic point of sale (PoS) system is able to provide both paper and electronic receipts. However, for an electronic receipt to be provided, a user must typically provide an email address. The receipt may then be sent as an email to the email address provided. An electronic receipt may have many benefits when compared to a paper receipt. For example, a link to a returns policy or customer services may be provided on the electronic receipt.

However, in some circumstances, the consumer may not wish to provide the merchant with their email address. It is known that the merchant may store the email address and/or provide the email address to a third party. The consumer's email address may be used for marketing or other email spam. Furthermore, the consumer's email address may be used for user tracking.

Aspects of the present disclosure seek to provide a transaction processing method that alleviates these problems with prior known systems. In particular, aspects of the present disclosure seek to provide a transaction processing method for privately capturing a receipt.

### Summary

According to a first aspect of the present disclosure, there is provided a transaction processing method for privately capturing a receipt, the method comprising: capturing a list of items at a point of sale system; receiving payment information at the point of sale system; completing a transaction based on the list of items and the payment information; providing a serialised electronic contact alias to the point of sale system, wherein the electronic contact alias includes a consumer identifier; and making a sales receipt available to a consumer via the electronic contact alias. In this way, the electronic receipt may be captured without exposing the consumer's email address or other personal information to the merchant. The method may be carried out by more than one party. For example, capturing of the list of items and receiving payment information may be carried out by the merchant. Providing the electronic contact alias may be carried out by the consumer, via their payment device, or by their card issuer. Making the sales receipt available to the consumer may be carried out, at least in part, by the merchant and/or the issuer. A payment processing network may carry out, or facilitate, one or more of the method steps.

The contact alias being serialised may mean that the contact alias is anonymised. The contact alias may be serialised as a vCard, otherwise known as a virtual contact file, or other known electronic attachment. The vCard may be attached or tagged to the payment information. As such, the payment information and the contact alias may be provided in a single step. The contact alias may be serialised with a widely known, understood and/or available scheme such that a standard scheme is established.

The list of items may identify the items, goods and/or services being purchased by a consumer. The list of items may include any number of items, such as one item, two items, five items, ten items, or any other number of items. The list of items may be a basket, a cart, a bag, or any other term of the art. Capturing a list of items at a point of sale system may be carried out in any conventional manner. For example, a PoS system user may scan a barcode associated with the at least one item. As an alternative example, a consumer may add the at least one item to the list of items in an online retail environment. The transaction may be partially online, such that an order may be placed online and the at least one item collected in person in a physical retail environment. The consumer may, for example, scan a QR code or other unique identifier at the physical retail environment to release the funds for the purchase and collect the at least one item.

Payment information may be received at the point of sale system by any known method, such as chip and pin, near-field communication (NFC) or a QR code payment. An NFC payment may be made with a contactless enabled card or a smart device.

Making the sales receipt available to a consumer via the electronic contact alias may comprise accessing the sales receipt via the electronic contact alias, identifying the consumer via the consumer identifier, and providing the sales receipt to the consumer. A database of consumers and associated consumer identifiers may be stored.

The sales receipt may be accessed from a portal or depository associated with the consumer. The portal or depository may be an email inbox associated with the consumer. For example, the receipt may be sent to an email address associated with the consumer but managed by an issuer. The issuer may then access the receipt from the email inbox. The email providing the receipt may have a standard form. Emails not in the standard form, such as spam or marketing emails, may be rejected, deleted or otherwise disregarded. Alternatively, the receipt may be published to a distributed immutable file systems such as IPFS and the address of the receipt may be posted to a smart contract owned by the consumer.

Providing the sales receipt to the consumer may include making the sales receipt accessible to the consumer in a banking environment. The banking environment may be an online banking environment. The receipt may be associated with the transaction in the banking environment. For example, the banking environment may include a list of transactions and associated receipts, should said transaction be carried out according to the present disclosure. Some, but not all, of the transactions may be carried out according to the present disclosure. As such, some, but not all, transactions listed in the banking environment may have an associated receipt. Alternatively or additionally, a list, unsorted or sorted, of receipts may be provided without being associated to a transaction.

Making the sales receipt available to the consumer may include encrypting the sales receipt, transferring the encrypted sales receipt to the portal or depository, and decrypting the sales receipt. In this way, the consumer's information and the transaction information may be protected and/or secured. The encryption may be carried out with any known encryption method or technique. The consumer identifier may not be directly related to the consumer. A key may be required to identify the consumer from the consumer identifier. For example, the data may be encrypted with an asymmetric cryptography method in which a public key is used to encrypt the data, and a private key is used to decrypt the data. In this way, a merchant system may be able to encrypt the data without being able to decrypt data. Only the intended recipient, the holder of the private key, may decrypt the data.

The method may further comprise extracting SKU level data from the sales receipt and identifying one or more purchased products. Accordingly, the at least one item in the list of items may be identified from the receipt. The method may further comprise determining at least one trend or metric from the SKU level data. The trend or metric may be related to the consumer's purchasing habits or history. For example, a trend for the consumer to purchase a certain type or category of item may be identified. The consumer may be provided with offers or other marketing material related to the trend or metric. As an alternative example, a carbon score may be calculated based on the buying habits of the consumer. The consumer may be provided with advice or other information related to improving their carbon score or reducing a carbon footprint.

SKU level data from a plurality of transactions may be stored. The at least one trend or metric may be updated each time new SKU level data is obtained. In this way, the consumer's habits may be tracked for a longer period of time and a more accurate trend or metric determined. The consumer may be notified that the trend or metric, such as a carbon score, is improving or deteriorating. SKU level data from a predetermined number of transactions may be considered. As such, historical transactions may be disregarded. The consumer may be able to select one or more transactions to be disregarded when determining the trend or metric. The consumer may be able to select one or more products or items within a transaction to be disregarded when determining the metric, such that a transaction is only partially disregarded. In this way, the consumer's trend or metric may not be affected by transactions that are not associated with the consumer's habits. For example, the consumer may make a purchase on behalf of a friend, relative or neighbour that should not affect the consumer's trend or metric. The consumer may reset the determination of the trend or metric. For example, the consumer may make a lifestyle or diet change and wish to disregard all prior transactions. Predictive analytics may be employed to infer possible or likely future events based on the trend or metric data.

The SKU level data and/or any other data associated with the transaction or receipt may be owned by the consumer. The consumer may monetise the data in any known way. For example, the consumer may sell the data related to their spending habits on an exchange. The data may be owned, fully or jointly, by the merchant with consent from the consumer. The consumer may be prompted, such as on their smart device, to give consent during each transaction. Alternatively, the consumer may set predetermined preferences. The preferences may, for example, set that all data may be jointly owned by the merchant, or that only the SKU level data without personal data may be jointly owned by the merchant. A smart contract may be used to convey the preferences of the consumer during the method.

The method may further comprise identifying auxiliary information associated with the one or more purchased products. The method may include making the auxiliary information available to the consumer. The auxiliary information may comprise a returns policy, a manual and/or a warranty. The auxiliary information may be provided alongside the receipt in the banking environment. For example, it may be determined that a television has been purchased. It may then be determined that the television was sold to the consumer with a two year warranty. The existence or the warranty may be highlighted to the consumer. The time remaining on the warranty may also be highlighted to the consumer. As an alternative example, it may be determined that an item of self-assembly furniture has been purchased. It may then be determined that an assembly instruction document exists and is provided to the consumer.

The method may further comprise generating the electronic contact alias prior to providing the electronic contact alias to the point of sale system. The electronic contact alias may be generated by a party other than a merchant such that the merchant is not provided access to personal information related to the consumer. The contact alias may be generated by the consumer, the consumer's device such as a smart phone, the issuer or the payment network. The contact alias may be stored on the consumer's device such that future transactions do not require the generation of a contact alias. Alternatively, a new contact alias may be generated for each transaction.

According to a second aspect of the present disclosure, there is provided a data processing system comprising a processor configured to perform the method of the first aspect.

According to a third aspect of the present disclosure, there is provided a computer program comprising instructions which, when the program is executed by a computer, cause the computer to carry out the method of the first aspect.

According to a fourth aspect, there is provided a computer-readable storage medium comprising instructions which, when executed by a computer, cause the computer to carry out the method of the first aspect.

### Brief Description of the Drawings

The disclosure will be further described with reference to examples depicted in the accompanying figures in which:
Figure 1 is a schematic system diagram showing a system arranged to privately capture a receipt;
Figure 2 is a method diagram showing the steps of a transaction processing method for privately capturing a receipt; and
Figure 3 is a method diagram showing additional optional steps to make the sales receipt available to the consumer via the electronic contact alias.

### Detailed Description

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "top", "bottom", "upper" and "lower" are used for convenience of explanation usually with reference to the illustrations and are not intended to be ultimately limiting if an equivalent function can be achieved with an alternative dimension, orientation and/or direction.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

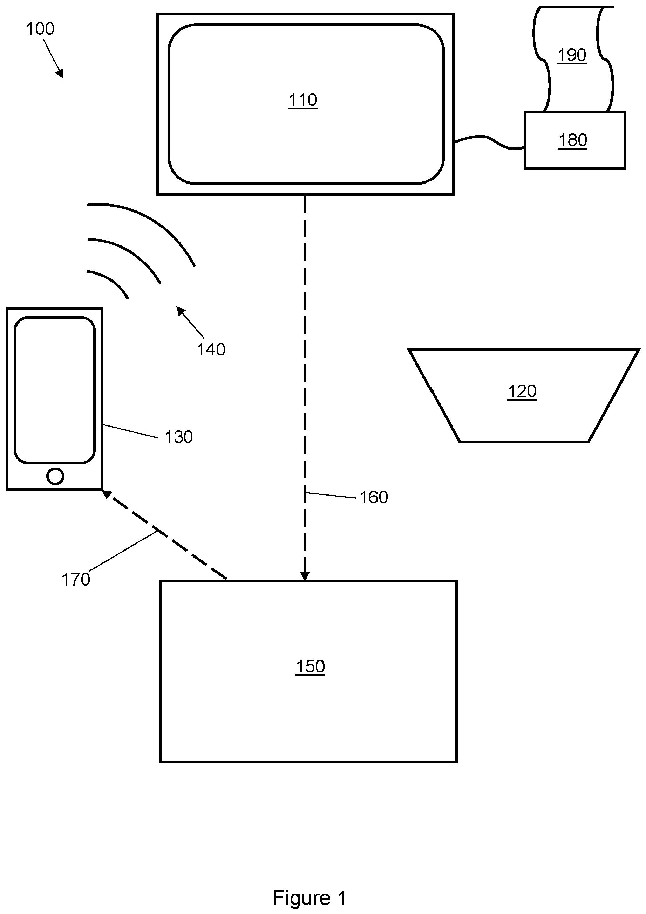

Figure 1 is a schematic system diagram showing a system 100 arranged to privately capture a receipt. The system 100 includes a point of sale system 110. The point of sale system 110 may include a physical terminal and be positioned in a physical retail environment. Alternatively, the point of sale system 110 may be software embedded in an e-commerce website environment. The point of sale system 110 is able to receive information related to one or more items to be purchased by a consumer. For example, a basket 120 of goods including barcodes may be scanned at the point of sale system, such that an electronic list of items to be purchased is created.

The point of sale system 110 is also able to receive payment information and generate and send a transaction request. The point of sale system 110 may, for example, receive the payment information from a wallet application of a smart device 130. The payment information is provided by the smart device 130 to the point of sale 110 via wireless communication 140. The wireless communication 140 may be according to any suitable wireless protocol, such as near-field communication.

Along with the payment information, the smart device 130 provides an electronic contact alias. The contact alias may be stored and provided by the issuer of the payment card used in the transaction, or by the consumer without involving the issuer. The contact alias may be serialised such that the contact alias is anonymised. The contact alias may be serialised as a vCard, otherwise known as a virtual contact file, or other known electronic attachment. The vCard may be attached or tagged to the payment information. As such, the payment information and the contact alias may be provided in a single step, without the need for the consumer or a another party to take additional steps. The contact alias may be serialised with a widely known, understood and/or available scheme such that a standard scheme is established.

The point of sale system 110 is in communication with a server 150, via a wired or wireless connection 160. Following the completion of the transaction, the point of sale system 110 provides the receipt and the consumer identifier included in the contact alias to the server 150. The receipt may be provided in an email or in any other suitable format. The server 150 identifies the consumer from the consumer identifier, with a lookup table, other database or directly from the consumer identifier. The server 150 may be arranged to extract SKU level data from the receipt. The server 150 may also be arranged to identify a trend or metric from the SKU level data as described herein.

The server 150 is in communication with the consumer's smart device 130, via a wireless connection 170. The server 150 makes the receipt available to consumer, for example in a banking app accessible on the smart device 130. The point of sale system 110 also includes a printer 180 to additionally provide a paper receipt 190 in the conventional manner.

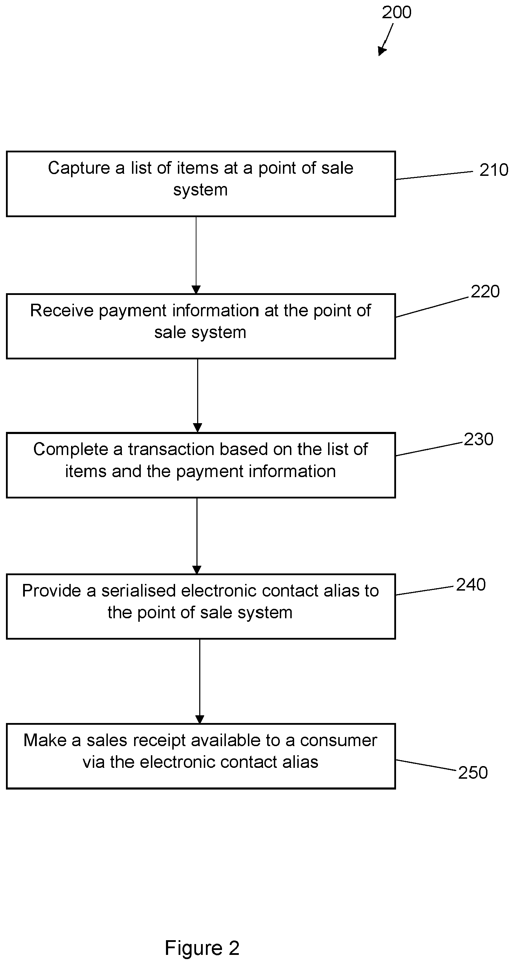

Figure 2 is a method diagram showing the steps of a transaction processing method 200 for privately capturing a receipt. The method includes the steps: capturing 210 a list of items at a point of sale system; receiving 220 payment information at the point of sale system; completing 230 a transaction based on the list of items and the payment information; providing 240 a serialised electronic contact alias to the point of sale system, wherein the electronic contact alias includes a consumer identifier; and making 250 a sales receipt available to a consumer via the electronic contact alias.

The method 200 allows for an electronic receipt to be captured without exposing the consumer's email address or other personal information to the merchant. Therefore, the merchant cannot store the consumer's email address and/or provide the email address to a third party. The consumer's email address cannot be used for marketing or other email spam, or user tracking.

In some examples, the contact alias may be serialised as a vCard, otherwise known as a virtual contact file, or other known electronic attachment. The vCard may be attached or tagged to the payment information. As such, the payment information and the contact alias may be provided in a single step. For example, the consumer may make a payment via NFC with a wallet application, and the NFC data transfer includes the serialised contact alias. A consumer may not need to take any additional action to purchase the at least one item, when compared to conventional methods.

Capturing 210 a list of items at a point of sale system may be carried out in any conventional manner. For example, a PoS system user may scan a barcode associated with the at least one item, or a consumer may add the at least one item to the list of items in an online retail environment. Other methods by which a list of items may be captured 210 are envisaged.

In some examples, making 250 the sales receipt available to a consumer via the electronic contact alias includes accessing the sales receipt via the electronic contact alias, identifying the consumer via the consumer identifier, and providing the sales receipt to the consumer. Accordingly, the receipt may be sent to a party other than the consumer, such as the issuer, who handles the administrative steps of receiving, sorting and providing the receipt to the consumer. The issuer may handle the administrative steps for a plurality of consumers. The issuer may keep a database of consumers and associated consumer identifiers. In one example, the receipt is sent to an email address associated with the consumer but managed by an issuer. In one example, the email address has the form consumer-identifier@issuer.com. Other forms of email address are envisaged. The issuer may then access the receipt from the email inbox and provide it to the consumer in any known way. Preferably, the email providing the receipt has a standard form and emails not in the standard form, such as spam or marketing emails, are be rejected, deleted or otherwise disregarded. In an alternative example, the receipt may be published to a distributed immutable file systems such as IPFS and the address of the receipt posted to a smart contract owned by the consumer.

In one example, making 250 the sales receipt available to the consumer includes providing the sales receipt to the consumer in a banking environment. The banking environment may be an online banking environment. For example, the banking environment may include a list of transactions and associated receipts, should said transaction be carried out according to the present disclosure. In this way, data related to the products purchased may be provided alongside a transaction amount in a banking environment.

Preferably, all data transfers are encrypted or otherwise protected. For example, the data may be encrypted with an asymmetric cryptography method in which a public key is used to encrypt the data, and a private key is used to decrypt the data. In this way, a merchant system may be able to encrypt the data without being able to decrypt data. Only the intended recipient, the holder of the private key, may decrypt the data.

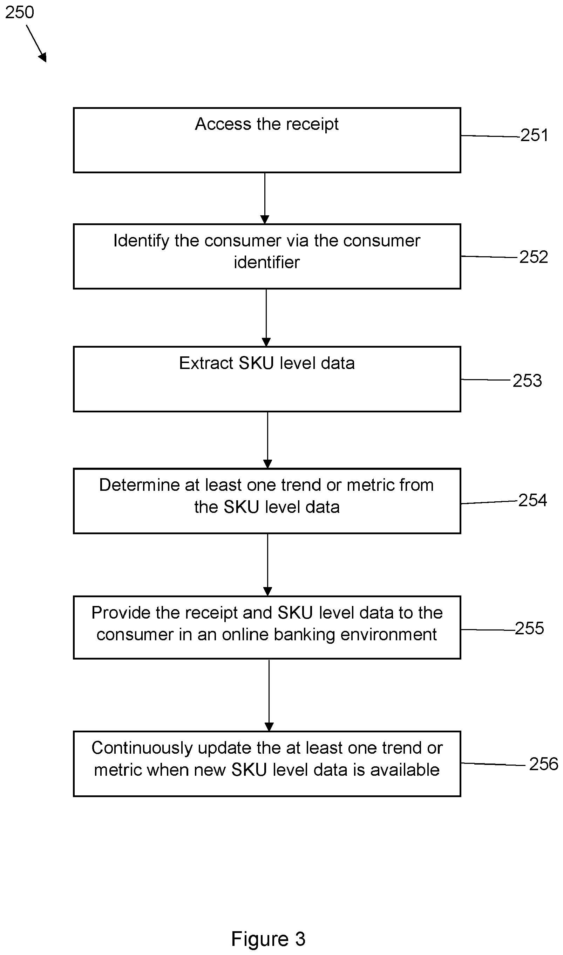

Figure 3 is a method diagram showing additional optional steps to make 250 the sales receipt available to the consumer via the electronic contact alias. The first step is to access 251 to the receipt. The receipt may be stored on a server maintained and/or operated by the consumer's card issuer or another party. The receipt may be stored within an email inbox, should the electronic contact alias include an email address associated with the consumer. The next step is to identify 252 to consumer via the consumer identifier included in the contact alias. In some examples, the email address associated with the consumer is used to identify the consumer.

The next step is to extract 253 SKU level data from the receipt. The contents of the receipt may be analysed to identify the one or more items purchased. The identity of the merchant may also be determined from the receipt if not otherwise available. The SKU level data is used to determine 254 at least one trend or metric. The trend or metric may be related to the consumer's purchasing habits or history. For example, a trend for the consumer to purchase a certain type or category of item may be identified. The consumer may be provided with offers or other marketing material related to the trend or metric. As an alternative example, a carbon score may be calculated based on the buying habits of the consumer. The consumer may be provided with advice or other information related to improving their carbon score or reducing a carbon footprint.

The next step is to provide 255 the receipt and SKU level data to the consumer in an online banking environment. For example, an interactable list of transactions may be provided to the consumer in the online banking environment. By interacting with a transaction entry in the interactable list, the consumer may be provided with the receipt and SKU level data. For example, the list of transactions may include a transaction relating to a purchase at a supermarket. By interacting with the transaction in the online banking environment, the consumer may be provided with the receipt and a list of items purchased at the supermarket. Should it be appropriate, for example if the metric is a carbon footprint score, the at least one trend or metric may also be provided to the consumer in this way.

The method may include continuously updating 256 the at least one trend or metric when new SKU level data is available. For example, the at least one trend or metric may be established on the basis of a first transaction. Following a second transaction, the at least one trend or metric may be updated such that it is based upon both the first and second transactions. The number of transactions used to determine the at least one trend or metric may be predetermined and/or adjustable by the consumer and/or a third party. The use of a particular transaction in determining the at least one trend or metric may be time limited, such that historical transactions do not obscure the identification of recent trends. Additionally, the consumer or a third party may prevent a transaction from being used when determining the at least one trend or metric, for example by selecting or deselecting the transaction in the online banking environment.

## Claims

1. A transaction processing method for privately capturing a receipt, the method comprising:
capturing a list of items at a point of sale system;
receiving payment information at the point of sale system;
completing a transaction based on the list of items and the payment information;
providing a serialised electronic contact alias to the point of sale system, wherein the electronic contact alias includes a consumer identifier; and
making a sales receipt available to a consumer via the electronic contact alias.

2. The method of claim 1, wherein making the sales receipt available to a consumer via the electronic contact alias comprises accessing the sales receipt via the electronic contact alias, identifying the consumer via the consumer identifier, and providing the sales receipt to the consumer.

3. The method of claim 2, wherein the sales receipt is accessed from a portal or depository associated with the consumer.

4. The method of claim 3, wherein making the sales receipt available to the consumer includes encrypting the sales receipt, transferring the encrypted sales receipt to the portal or depository, and decrypting the sales receipt.

5. The method of any of claims 2 to 4, wherein providing the sales receipt to the consumer includes making the sales receipt accessible to the consumer in a banking environment.

6. The method of any preceding claim, further comprising extracting SKU level data from the sales receipt and identifying one or more purchased products.

7. The method of claim 6, further comprising determining at least one trend or metric from the SKU level data.

8. The method of claim 7, wherein SKU level data from a plurality of transactions is stored, and the at least one trend or metric is updated each time new SKU level data is obtained.

9. The method of any of claims 6 to 8, further comprising identifying auxiliary information associated with the one or more purchased products, and making the auxiliary information available to the consumer, wherein the auxiliary information comprises a returns policy, a manual and/or a warranty.

10. The method of any preceding claim, wherein the consumer identifier is not directly related to the consumer such that a key is required to identify the consumer from the consumer identifier.

11. The method of any preceding claim, further comprising generating the electronic contact alias prior to providing the electronic contact alias to the point of sale system.

12. The method of claim 11, wherein the electronic contact alias is generated by a party other than a merchant such that the merchant is not provided access to personal information related to the consumer.

13. A data processing system comprising a processor configured to perform the method of any preceding claim.

14. A computer program comprising instructions which, when the program is executed by a computer, cause the computer to carry out the method of any of claims 1 to 12.

15. A computer-readable storage medium comprising instructions which, when executed by a computer, cause the computer to carry out the method of any of claims 1 to 12.
